Europäisches Patentamt

European Patent Office

Office européen des brevets

(11) Veröffentlichungsnummer: **0 419 705 A1**

(12) **EUROPÄISCHE PATENTANMELDUNG**

(21) Anmeldenummer: 89117900.4

(22) Anmeldetag: 27.09.89

(51) Int. Cl.5: **G05B 19/407**

(43) Veröffentlichungstag der Anmeldung:
**03.04.91 Patentblatt 91/14**

(84) Benannte Vertragsstaaten:
**AT CH DE FR IT LI NL SE**

(71) Anmelder: **Siemens Aktiengesellschaft**
**Wittelsbacherplatz 2**
**W-8000 München 2(DE)**

(72) Erfinder: **Böhm, Manfred, Dipl.-Ing.**
**Haus-Nr. 30**
**W-8551 Wannbach(DE)**

(54) **Verfahren zur Ruckbegrenzung von numerischen Antriebssystemen.**

(57) Das Verfahren zur Ruckbegrenzung von numerischen Antriebssystemen ist für Positions- und Bahnsteuerungen bei Robotern, Werkzeugmaschinen, Aufzügen etc. anwendbar. Bei der Vorgabe von Steuersignalen werden sprunghafte Beschleunigungs- oder Geschwindigkeitsänderungen dadurch bedämpft, daß die von einer numerischen Steuerung berechneten diskreten Steuerwerte mittels eines Impulsfilters nach dem Prinzip der diskreten Faltung gefiltert werden.

FIG 3

FIG 7

EP 0 419 705 A1

## VERFAHREN ZUR RUCKBEGRENZUNG VON NUMERISCHEN ANTRIEBSSYSTEMEN

Bei zahlreichen technischen Anwendungen von Antriebssystemen, wie sie z.B. bei Förderanlagen, Aufzügen, Werkzeugmaschinen, Industrierobotern, Walzwerksanlagen oder Fahrzeugsteuerungen verwendet werden, ist eine Erzeugung von Bewegungsabläufen entsprechend definierter Bahnen erforderlich. Bei numerisch gesteuerten Antriebssystemen wird eine Folge von Sollpositionen in einer oder mehreren Koordinaten in einem bestimmten Zeittakt vorgegeben. Die Aufgabe der Steuerung besteht dabei darin, für den Übergang zwischen zwei Sollpositionen ein bestimmtes Beschleunigungs- und Geschwindigkeitsprofil zu berechnen und dem Antriebssystem vorzugeben. Dabei sollen die zulässigen Verfahrgeschwindigkeiten und die verfügbare Antriebsleistung möglichst gut ausgenutzt werden, ohne jedoch die Kontur durch Begrenzungseffekte oder Überschwingen zu verzerren.

Der vorliegenden Erfindung liegt die Aufgabe zugrunde, numerische Positions- oder Bahnsteuerungen so auszugestalten, daß sprunghafte Änderungen der Sollbeschleunigungswerte vermieden werden.

Gemäß der Erfindung wird diese Aufgabe durch ein Verfahren zur Ruckbegrenzung von numerisch gesteuerten motorischen Antriebssystemen nach folgenden Merkmalen gelöst:

a) von einer numerischen Steuervorrichtung werden Steuersignale als Folge von beschleunigsgeführten diskreten Steuerwerten zu diskreten Abtastzeitpunkten vorgegeben,

b) die diskreten Steuerwerte werden auf den Eingang eines Impulsfilters gegeben, wobei das Impulsfilter den stationären Übertragungsfaktor "Eins" und eine Impulsbreite von einem Vielfachen der Abtastzeit aufweist,

c) das Antriebssystem wird mit den gefilterten diskreten Steuerwerten beaufschlagt.

Das Verfahren wird anhand der beigefügten Zeichnung näher erläutert. Dabei zeigen:

FIG 1 die Struktur einer rechnergeführten Steuerung bei einer numerisch gesteuerten Werkzeugmaschine,

FIG 2 ein Diagramm des Geschwindigkeitsverlaufs über dem Weg mit maximaler Beschleungiung,

FIG 3 ein Diagramm des Geschwindigkeitsverlaufs über dem Weg mit den Tastintervallen angepaßten Beschleunigungsverläufen,

FIG 4 ein Flußdiagramm und

FIG 5 ein Blockschaltbild, das den Zusammenhang von Ruck, Beschleunigung, Geschwindigkeit und Position veranschaulicht,

FIG 6 ein Blockschaltbild eines Impulsfilters,

FIG 7 ein Diagramm zur Bildung eines ruckbegrenzten Beschleunigungsvorganges.

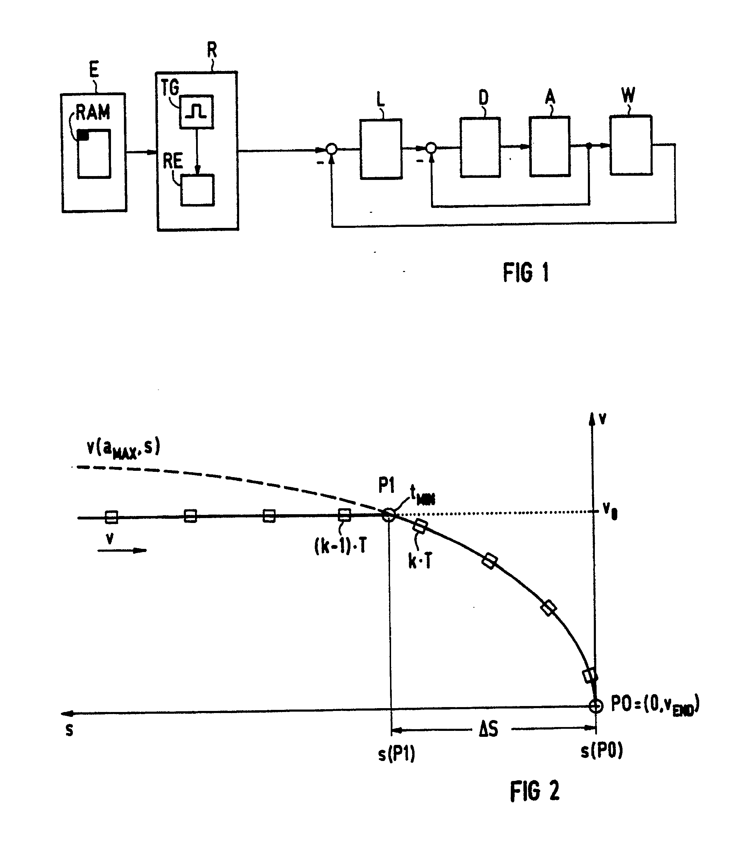

FIG 1 zeigt die Struktur einer rechnergeführten Steuerung einer numerisch gesteuerten Werkzeugmaschine W. Von einem Eingabegerät E werden die beispielsweise in einem Schreib-Lese-Speicher RAM abgespeicherten Informationen über den programmierten Bearbeitungsablauf in einen Rechner R eingegeben. Der Rechner R dekodiert die eingegebenen Informationen, nimmt Interpolationen vor, führt Berechnungen zur Ermittlung von Lagesollwerten für den Lageregelkreis L und Geschwindigkeitsberechnungen durch und übernimmt die Ablaufsteuerung. Der Rechner R enthält einen Taktgeber TG zur Erzeugung eines Taktrasters. Eine vorgegebene Anzahl von Takten des Taktgebers TG bildet eine Rechenzykluszeit oder Abtastzeit T. Während einer Abtastzeit T müssen jeweils erneut Lagesollwerte für jeden Lageregelkreis gebildet werden. Der Rechner R gibt Lagesollwerte an die Lageregelkreise L. Jeder Lageregelkreis L vergleicht die Lagesollwerte mit den Lage istwerten der Werkzeugmaschine W und steuert einen Drehzahlregelkreis D für das bzw. die Antriebssysteme A der betreffenden Maschinenachse. Eine Recheneinrichtung RE des Rechners R liefert zu jeder Abtastzeit ein beschleunigungs- und geschwindigkeitsproportionales Weginkrement, das durch eine geeignete Interpolation auf die einzelnen gesteuerten Maschinenachsen übertragen wird.

Bevor auf die Ruckbegrenzung von diskreten Steuersignalen eingegangen wird, wird zunächst anhand der Figuren 2 bis 4 ein Verfahren beschrieben, durch das eine Folge von beschleunigungsgeführten diskreten Steuerwerten erzeugt wird und bei dem eine Ruckbegrenzung vorteilhaft angewendet werden kann.

FIG 2 zeigt ein Geschwindigkeits-Wegdiagramm für einen Bremsvorgang eines Antriebssystems. Das Antriebssystem könnte beispielsweise die Leitspindel und über diese einen Schlitten der Werkzeugmaschine W antreiben. Wie der Geschwindigkeitspfeil mit der Geschwindigkeit v zeigt, bewegt sich der Schlitten in Richtung abnehmender Werte von S. Zunächst wird der Schlitten mit der konstanten Geschwindigkeit $v_0$ verfahren. Am Punkt P0, also im Schnittpunkt des Koordinatensystems, soll der Schlitten die Beschleunigung 0 und die Endgeschwindigkeit $v_{END}$ aufweisen. Dazu muß die konstante Verfahrgeschwindigkeit $v_0$ so abgebremst werden, daß der Zielpunkt s(P0) mit der Endgeschwindigkeit $v_{END}$ erreicht wird. Bei maximaler

2

Verzögerung $a_{MAX}$ ergibt sich dabei die in FIG 2 eingezeichnete Parabel. Diese Parabel schneidet die Gerade mit der konstanten Geschwindigkeit $v_0$ in dem mit einem Kreis gekennzeichneten Punkt P1. Genau an diesem Punkt P1 müßte mit der Beschleunigung $a_{MAX}$ verzögert werden, um den Zielpunkt P0 mit der Endgeschwindigkeit $v_{END}$ zu erreichen. (Der Begriff "Beschleunigung" wird allgemein, also auch im Sinne von "bremsen" bzw. "verzögern" gebraucht).

In das Diagramm nach FIG 2 sind die jeweiligen Abtastzeitpunkte eingezeichnet, die dem Taktzyklus der numerischen Steuerung des Rechners R entsprechen. Wie ersichtlich ist, liegt der Schnittpunkt der Parabel mit der Beschleunigung $a_{MAX}$ und der Geraden mit der konstanten Geschwindigkeit $v_0$ zwischen den Tastzeitpunkten (k-1).T and k.T. Von der numerischen Steuerung kann jedoch nur zu einem Tastzeitpunkt eine Vorgabe von Geschwindigkeits-bzw. Beschleunigungssollwerten vorgenommen werden. Würde jedoch bereits beim Tastzeitpunkt (k-1).T mit der Beschleunigung $a_{MAX}$ verzögert werden, so würde die Verfahrbewegung des Schlittens bereits vor dem Punkt P0 die Endgeschwindigkeit $v_{END}$ erreicht haben. Wenn die Beschleunigung $a_{MAX}$ erst zum Abtastzeitpunkt k.T einsetzen würde, würde der Schlitten über den Punkt P0 hinaus fahren.

Nun wäre es denkbar, bereits im Abtastzeitpunkt (k-1).T mit einer Beschleunigung a, die kleiner ist als die maximale Beschleunigung $a_{MAX}$, zu verzögern und diese Beschleunigung so zu wählen, daß der Punkt P0 zielgenau erreicht würde. Mit dieser Maßnahme wäre es jedoch dem Zufall überlassen, ob nunmehr der Zielpunkt P0 zu einem Tastzeitpunkt T ereicht würde, so daß sich für den anschließenden Positionier- bzw. Verfahrvorgang die gleichen Probleme wie bei der Einleitung der ersten Verzögerung erneut stellen.

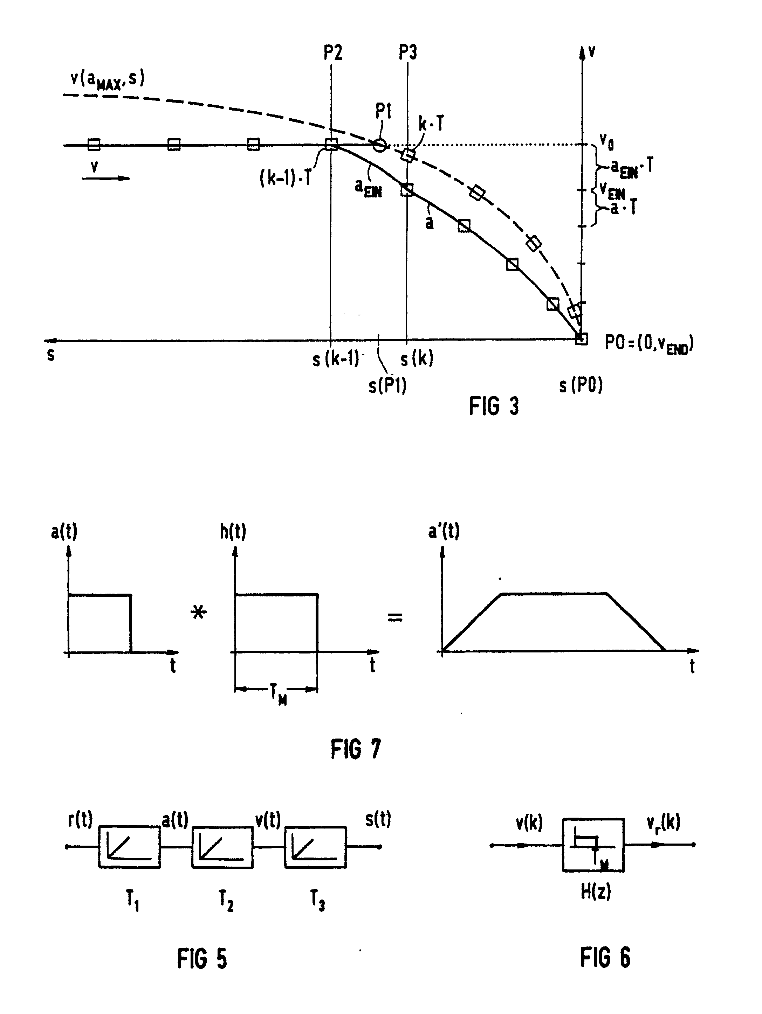

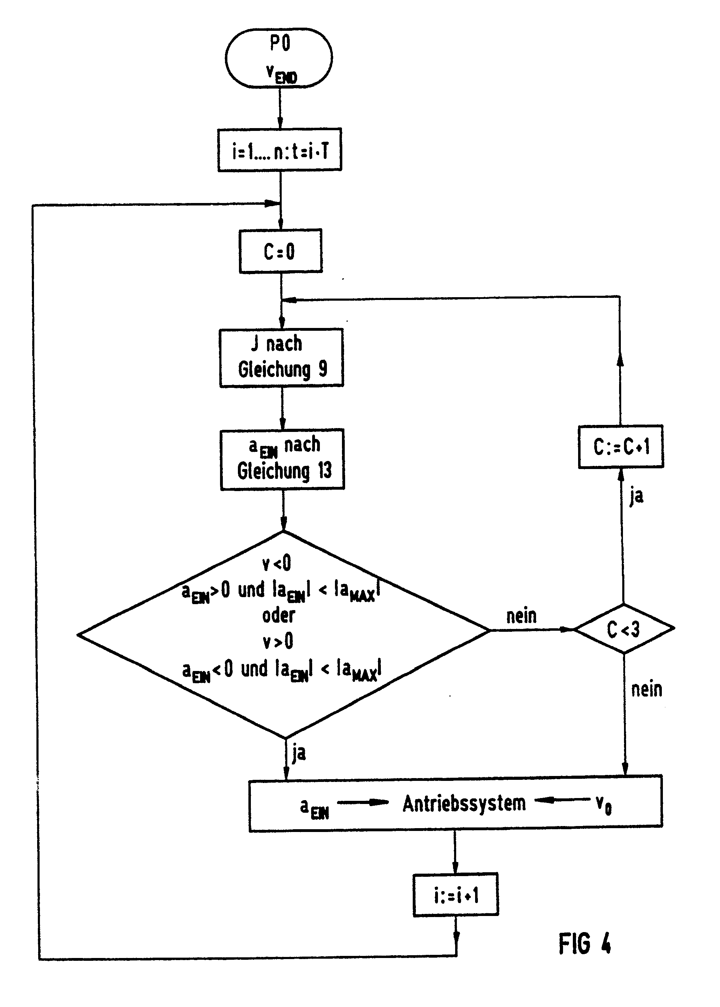

Mit dem im folgenden näher beschriebenen Verfahren ist sichergestellt, daß eine zu einem Tastzeitpunkt eingeleitete Beschleunigung bzw. Verzögerung eines Antriebssystems einen vorgegebenen Zielpunkt mit einer vorgegebenen Endgeschwindigkeit genau zu einem Tastzeitpunkt erreicht. Vom Rechner R einer numerischen Steuerung werden dazu mindestens zwei Beschleunigungswerte nach einfachen kinematischen Beziehungen mit minimalem Rechenaufwand berechnet und an die numerische Steuerung weitergegeben. Die erforderlichen Gleichungen werden im folgenden anhand der FIG 3 hergeleitet.

FIG 3 zeigt ein Geschwindigkeitswegdiagramm mit der bereits aus FIG 2 bekannten in FIG 3 jedoch gestrichelt gezeichneten Parabel mit der Beschleunigung $a_{MAX}$. Zwischen den Punkten P2 und P3 ist ein weiteres Teilstück einer Parabel mit der Beschleunigung $a_{EIN}$ und zwischen den Punkten P3 und P0 eine weitere Parabel mit der Beschleunigung a eingezeichnet.

Ein Übergang auf die Bremsparabel mit der Beschleunigung a ist nur zu einem Tastzeitpunkt T erreichbar, für den gilt:

$|a_{EIN}|$ kleiner $|a_{MAX}|$     Gl.1

Für die Eintrittsgeschwindigkeit $v_{EIN}$ am Punkt P3, also die Geschwindigkeit ab der mit der Beschleunigung a gebremst werden soll gilt:

$v_{EIN} = v_0 + a_{EIN} . T$     Gl.2

Die Beschleunigungen $a_{EIN}$ und a sind dabei so zu wählen, daß der Zielpunkt P0 nach einer ganzzahligen Anzahl von Tastintervallen erreicht wird. Der Zeitpunkt, ab dem der Bremsvorgang mit der Beschleunigung $a_{EIN}$ eingeleitet wird, sei t = (k-1)T.

Für das Wegstück zwischen den Punkten P2 und P3 erhält man

$$s(k-1) - s(k) = v_0 . T + \frac{a_{EIN}}{2} . T^2 \qquad . \qquad Gl.3$$

Daraus läßt sich der mit der Beschleunigung a zurückzulegende Restweg s(k) in Abhängigkeit von der Einrittsbeschleunigung $a_{EIN}$ bestimmen. Dieser Restweg s(k) ist genau der Weg, in dem die Eintrittsgeschwindigkeit $v_{EIN}$ nach Gleichung 2 in der Zeit t, die einem ganzzahligen Vielfachen J der Abtastzeit T entspricht, auf die Endgeschwindigkeit $v_{END}$ abgebremst werden muß.

Deshalb gilt

t = J . T mit J Element von N     Gl.4

Für den mit der Beschleunigung a zurückzulegenden Restweg s(k) gilt auch die sogenannte zeitfreie Gleichung für gleichmäßig beschleunigte Bewegungen mit Anfangsgeschwindigkeit:

$$s(k) = \frac{1}{2a} (v_{EIN}^2 - v_{END}^2) \qquad Gl.5$$

Mit Gleichung 2 und Gleichung 5 ergibt sich für den Restweg s(k):

$$s(k) = \frac{1}{2a} \left( (v_0 + a_{EIN} \cdot T)^2 - v_{END}^2 \right) \qquad \text{Gl.6}$$

oder

$s(k) = \frac{1}{2a} ((v_0 + a_{EIN} \cdot T) + v_{END})((v_0 + a_{EIN} \cdot T) - v_{END})$     Gl.7

Für die Eintrittsgeschwindigkeit $v_{EIN}$ gilt ferner:

$v_{EIN} = J \cdot T \cdot a$     Gl.8 Durch Vergleich mit der Dauer des kontinuierlichen Bremsvorganges mit der Beschleunigung $a_{MAX}$ kann J nach Gleichung 9 geeignet gewählt werden,

$$J = \text{ganzzahliger Anteil} \left( \frac{v_{EIN} - v_{END}}{a_{MAX} \cdot T} \right) + C \qquad \text{Gl.9}$$

mit C = 0,1,2,

so daß der Bremsvorgang einschließlich dem Eintrittsintervall zwischen den Punkten P2 und P3 maximal drei Intervalle länger als ein kontinuierlicher Bremsvorgang mit maximaler Verzögerung dauern würde. (Gleichung 9 entspricht Gleichung I der Patentansprüche 3 und 4).

Für die Beschleunigung a ergibt sich

$$a = \frac{v_{EIN} - v_{END}}{J \cdot T} \qquad \text{Gl.10}$$

und mit Gleichung 2

$$a = \frac{v_0 + a_{EIN} \cdot T - v_{END}}{J \cdot T} \qquad \text{Gl.11}$$

(Gleichung 11 entspricht Gleichung V des Patentanspruches 3).

Mit Gleichung 7 und Gleichung 11 erhält man

$s(k) = \frac{1}{2} J \cdot T (v_0 + a_{EIN} \cdot T + v_{END})$     Gl.12

Setzt man Gleichung 3 und Gleichung 12 gleich, dann erhält man für die gesuchte Eintrittsbeschleunigung:

$$a_{EIN} = \frac{2\, s(k-1) - (J+2) \cdot T \cdot v_0 - J \cdot T \cdot v_{END}}{(J + 1)\, T^2} \qquad \text{Gl.13}$$

Wenn also nach Gleichung 9 der Wert von J bestimmt ist, kann nach Gleichung 13 die Eintrittsbeschleunigung $a_{EIN}$ mit minimalem Rechenaufwand (Gleichung 13 weist als aufwendigste Rechenoperation lediglich einen quadratischen Term auf) berechnet werden. (Gleichung 13 entspricht Gleichung II der Patentansprüche 3 und 4).

Anhand des Flußdiagramms gemäß FIG 4 seien die von der numerischen Steuerung durchzuführenden Schritte unter Bezugnahme auf die obenstehenden Gleichungen erläutert.

In einem ersten Schritt werden der numerischen Steuerung der Zielpunkt P0 und die Endgeschwindigkeit $v_{END}$, mit der der Zielpunkt P0 erreicht werden soll, übergeben. Bei jedem Abtastzeitpunkt $i \cdot T$, wobei die Zählvariable i von 1 bis n läuft, werden die folgenden Verfahrensschritte durchgeführt. Zunächst wird die Konstante C = 0 gesetzt; dann wird mit dieser Konstante J nach Gleichung 9 bestimmt. Nachdem J bestimmt ist, kann die Eintrittsbeschleunigung $a_{EIN}$ nach Gleichung 13 berechnet werden. Mit der Eintrittsbeschleunigung $a_{EIN}$ wird bei positiver Fahrt, also bei v kleiner 0, geprüft, ob die Eintrittsbeschleunigung $a_{EIN}$ größer 0 und der Betrag der Eintrittsbeschleunigung $|a_{EIN}|$ kleiner dem Betrag der Maximalbeschleunigung $|a_{MAX}|$ ist. Bei positiver Fahrt, d.h. wenn die Geschwindigkeit v größer 0 ist, wird geprüft, ob die Eintrittsbeschleunigung $a_{EIN}$ kleiner 0 ist und der Betrag der Eintrittsbeschleunigung $|a_{EIN}|$ kleiner ist als der Betrag der Maximalbeschleunigung $|a_{MAX}|$. Ist eine dieser beiden Bedingungen erfüllt, so wird das Antriebssystem mit der Eintrittsbeschleunigung $a_{EIN}$ beaufschlagt. Ist keine der beiden Bedingungen erfüllt, so wird, solange C kleiner 3 ist, die Konstante C um den Wert "Eins" inkrementiert und die Verfahrensschritte werden wiederholt. Falls die Bedingungen für den Wert C = 2 nicht erfüllt sind, wird das Antriebssystem weiterhin mit der konstanten Geschwindigkeit $v_0$ beaufschlagt. Diese Verfahrensschritte werden dann solange wiederholt, bis der Zielpunkt P0 mit der Eintrittsgeschwindigkeit $v_{END}$ erreicht wird.

Ausdrücklich soll hier nochmal erwähnt werden, daß es nicht notwendig ist, aus der Eintrittsbeschleunigung $a_{EIN}$ die Beschleunigung a zu berechnen, mit der der Zielpunkt P0 schließlich mit der Endgeschwindigkeit $v_{END}$ erreicht wird. Wenn, wie beschrieben, bei jedem Abtastzeitpunkt T die Eintrittsbeschleunigung $a_{EIN}$ nach der angegebenen Gleichung 13 berechnet wird, so ist automatisch sichergestellt, daß der Zielpunkt P0 zu einem Tastzeitpunkt T erreicht wird.

Damit das Antriebssystem durch die Beschleunigungsänderungen $a_{EIN}$ keine zu großen Sprünge erfährt, wird gemäß der Erfindung eine Ruckbegrenzung vorgesehen. Eine solche Ruckbegrenzung kann beispielsweise durch Filterung der Beschleunigungswerte erreicht werden, wenn das Filter so ausgestaltet ist, daß die Flanken eines jeweiligen Beschleunigungsimpulses verschliffen werden, so daß der jeweils neue Beschleunigungswert allmählich erreicht wird. Dies gilt selbstverständlich in gleicher Weise für Geschwindigkeitsänderungen.

FIG 5 zeigt anhand eines regelungstechnischen Blockschaltbildes mit den Integratoren $T_1$, $T_2$, $T_3$ den Zusammenhang zwischen Ruck r(t), Beschleunigung a(t), Geschwindigkeit v(t) und Position bzw. Lage s(t). Dieser Zusammenhang ist mathematisch in Gleichung 14 beschrieben

$$r \quad = \quad \frac{da(t)}{dt} \quad = \quad \frac{d\overset{2}{v}(t)}{dt^2} \quad = \quad \frac{d^3 s}{dt^3} \qquad\qquad Gl.14$$

Eine Ruckbegrenzung mit einem Filter auf Basis einer diskreten Faltung ist im folgenden näher erläutert.

Mit den Gleichungen 9 und 13 wird für einen beliebigen Weg von $s_1$ nach $s_2$ eine Folge von Geschwindigkeitssollwerten v(k) erzeugt. Die Position $s_1$ läßt sich nach Gleichung 15 als Linearkombination der einzelnen Geschwindigkeitssollwerte ausdrükken:

$$s_1 = s_0 + \sum_{k=0}^{m} v(k-1) \; T + \frac{v(k) - v(k-1)}{2} \cdot T \qquad\qquad Gl.15$$

$$= s_0 + \sum_{k=0}^{m} \frac{v(k) + v(k-1)}{2} \cdot T$$

Die Lage $s_1$ wird aufgrund der Linearität ebenfalls erreicht, wenn statt der Folge v(k) die Folge $v_r(k)$ vorgegeben wird. Die Folge $v_r(k)$ erhält man aus v(k) durch Mittelwertbildung mit gleitendem Fenster der Breite $T_M = M \cdot T$, wenn das Filter den stationären Übertragungsfaktor 1 hat bzw. die Impulsantwort

$$g(k) \quad = \quad \begin{cases} 1/M & \text{für} \quad k \text{ kleiner } M \\ 0 & \text{sonst} \end{cases} \qquad\qquad Gl.16$$

Dieser Sachverhalt ist anhand der FIG 6 dargestellt. Auf das Filter mit der Fensterbreite $T_M$ und der diskreten Übertragungsfunktion H(z) wird eine Folge von Geschwindigkeitssollwerten $v_{(k)}$ gegeben. Als Resultat der Filterung erhält man eine Folge von Geschwindigkeitssollwerten $v_{r(k)}$.

Damit ergibt sich ein maximaler Ruck, also die Ableitung der Beschleunigung

$r_{MAX}$ kleiner $= 1/T_M \cdot a_{MAX}$     Gl.17

Auch für mittlere und kleine Wege wird weiterhin überschwingfreies exaktes Positionieren gewährleistet. Der Ruck kann dann bis zum Wert

$r_{MAX}$ kleiner $= 2/T_M \cdot a_{MAX}$     Gl.18

ansteigen. Erforderlichenfalls muß also bei kleinen Wegen mit der doppelten Fensterbreite ($T_M$) gemittelt werden.

Die beschriebene Ruckbegrenzung durch das Impulsfilter entspricht einer diskreten Faltung, deren prinzipieller Verlauf anhand der FIG 7 der Einfachheit halber für den kontinuierlichen Fall beschrieben wird. Die Beschleunigung a(t) innerhalb eines Tastintervalls wird dabei gefaltet mit dem Filter mit der Übertragungsfunktion h(t). Das Ergebnis der Faltung a'(t) zeigt, daß die resultierende Beschleunigung nicht mehr sprungartig, sondern kontinuierlich ansteigt. Die Faltungsbeziehung für den kontinuierlichen Fall lautet:

$$a'(t) = a(t) * h(t) = \int_{0}^{\infty} a(t) \cdot h(\mathcal{C} - t)\, dt. \qquad \text{Gl.19}$$

**Ansprüche**

1. Verfahren zur Ruckbegrenzung von numerisch gesteuerten Antriebssystemen, nach folgenden Merkmalen:

   a) von einer numerischen Steuervorrichtung werden Steuersignale als Folge von beschleunigungsgeführten diskreten Steuerwerten ($v_{(k)}$) zu diskreten Abtastzeitpunkten (T) vorgegeben,

   b) die diskreten Steuerwerte ($v_{(k)}$) werden auf den Eingang eines Impulsfilters gegeben, wobei das Impulsfilter den stationären Übertragungs faktor "Eins" und eine Impulsbreite ($T_M$) von einem Vielfachen (M.T) der Abtastzeit (T) aufweist,

   c) das Antriebssystem (A) wird mit den gefilterten diskreten Steuerwerten ($v_r(k)$) beaufschlagt.

FIG 1

FIG 2

FIG 3

FIG 7

FIG 5

FIG 6

P 0
$v_{END}$

$i=1....n:t=i\cdot T$

C=0

J nach
Gleichung 9

$a_{EIN}$ nach
Gleichung 13

$v < 0$
$a_{EIN} > 0$ und $|a_{EIN}| < |a_{MAX}|$
oder
$v > 0$
$a_{EIN} < 0$ und $|a_{EIN}| < |a_{MAX}|$

nein

$C < 3$

C:=C+1

ja

nein

ja

$a_{EIN} \longrightarrow$ Antriebssystem $\longleftarrow v_0$

i:=i+1

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4603286 (SAKANO)<br>* das ganze Dokument *<br>--- | 1 | G05B19/407 |
| A | PATENT ABSTRACTS OF JAPAN<br>vol. 12, no. 408 (P-778) 28 Oktober 1988,<br>& JP-A-63 146105 (MITSUBISHI ELECTRIC CORP.) 18 Juni 1988,<br>* das ganze Dokument *<br>----- | 1 | |

**RECHERCHIERTE SACHGEBIETE (Int. Cl.5 )**

G05B
G05D
B65G

Der vorliegende Recherchenbericht wurde für alle Patentansprüche erstellt

| Recherchenort | Abschlußdatum der Recherche | Prüfer |
|---|---|---|
| DEN HAAG | 25 MAI 1990 | MOYLE J.F. |